# EUROPEAN PATENT SPECIFICATION

(11) **EP 3 750 251 B1**
(45) Date of publication and mention of the grant of the patent: **18.11.2026**
(21) Application number: 18710356.9
(22) Date of filing: 26.02.2018
(51) Int. Cl.: H04B 7/0413, H04B 7/06

(54) **TERMINAL DEVICE AND BASE STATION DEVICE FOR CHANNEL SIMILARITY ACQUISITION**
ENDGERÄT UND BASISSTATIONSVORRICHTUNG ZUR KANALÄHNLICHKEITSERFASSUNG
DISPOSITIF TERMINAL ET DISPOSITIF DE STATION DE BASE POUR UNE ACQUISITION DE SIMILARITÉ DE CANAL

(43) Date of publication of application: 16.12.2020
(73) Proprietor: HUAWEI TECHNOLOGIES CO., LTD., Shenzhen, Guangdong 518129 (CN)
(72) Inventor: KOUNTOURIS, Marios, 80992 Munich (DE); KSAIRI, Nassar, 80992 Munich (DE)
(74) Representative: Roth, Sebastian
(86) International application number: PCT/EP2018/054690
(87) International publication number: WO 2019/161934

(56) References cited:
- WO-A1-2016/199988
- US-A1- 2016 294 462
- US-A1- 2017 223 689
- US-A1- 2018 026 764
- US-B1- 8 238 931
- NICOLAI CZINK ET AL: "Spatial separation of multi-user MIMO channels", IEEE 20TH INTERNATIONAL SYMPOSIUM ON PERSONAL, INDOOR AND MOBILE RADIO COMMUNICATIONS (PIMRC 2009) IEEE, PISCATAWAY, NJ, USA, 13 September 2009 (2009-09-13), pages 1059 - 1063, XP031660110, ISBN: 9781424451227, DOI: 10.1109/PIMRC.2009.5450309

## Description

### TECHNICAL FIELD

The present invention relates to a terminal device and to a base station device both for acquiring and exploiting channel similarity between a channel from the base station device to the terminal device and at least one other channel from the base station device to at least one other terminal device. The present invention also relates to corresponding methods for the terminal device and the base station device, respectively. The channel similarity acquisition can in particular be exploited for packet scheduling, mapping and precoding in Multiuser Multiple Input Multiple Output (MU-MIMO) systems with possibly delay/latency constraints.

### BACKGROUND

In a wireless multiuser access scenario, in which a Base Station (BS, or base station device) needs to communicate with multiple user terminals (or terminal devices), special downlink signals known by the terminals, e.g. CSI-RS pilots in LTE, are normally transmitted by the BS, so that the terminals can generate Channel State Information (CSI) about the wireless links (i.e. channels) from the BS. These special pilot signals are also called Cell-specific Reference Signals (CRS). The CSI that is thus obtained can be fed back to the BS, in order to be used by the BS to take scheduling decisions for subsequent transmissions to the terminals, i.e. particularly to determine which of them to transmit/receive on which time-frequency radio resources.

Furthermore, if the BS has multiple antennas, signals destined to multiple (co-scheduled) terminals can in principle be transmitted on the same time-frequency resources using MU-MIMO techniques, thus potentially causing multiuser interference at the side of the terminals. In that case, the CSI that is fed back from the terminals is used by the BS to help keep this interference as small as possible. One practical MU-MIMO downlink scheme is linear precoding (often referred to as transmit beamforming), which consists in multiplying the data symbols to be transmitted with user and antenna dependent coefficients, which are selected based on the CSI of the co-scheduled terminals, and then in adding (combining) the resulting signals before passing them to the antenna array.

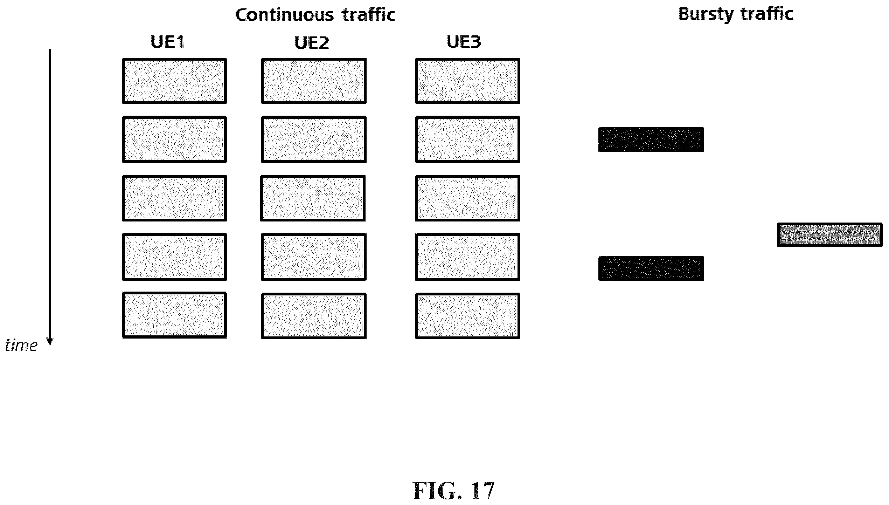

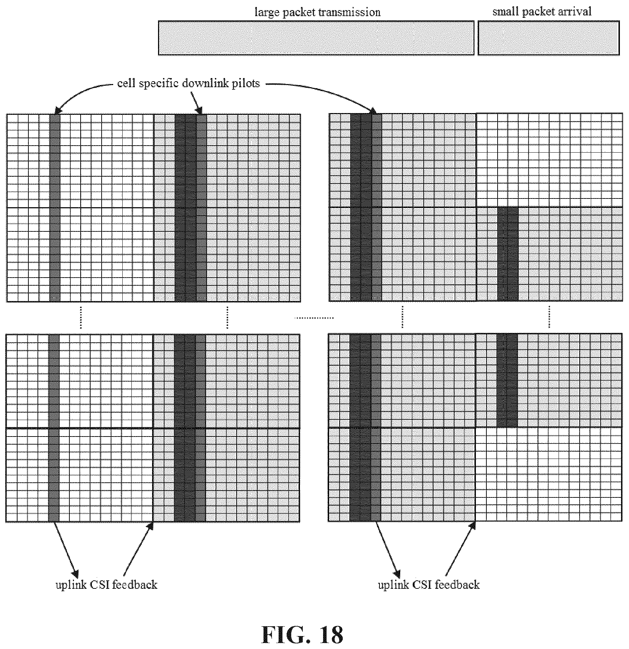

Since the resources (in time and/or frequency) that are devoted to the downlink pilot signals are subtracted from those resources used for data transmission, they represent an overhead for the wireless system. In massive MIMO, this overhead can be large since the length of cell specific pilots should be made to increase with the BS array size. In particular, in scenarios with delay-constrained short packets (see FIG. 17, which shows an example of both large and short packet arriving at the BS), e.g. in Ultra-Reliable Low-Latency Communications (URLLC) scenarios, the overhead associated with the downlink cell-specific pilots could be even larger, since the periodicity of sending these pilots should be increased if the BS is to have up-to-date CSI as soon as the delay sensitive packet arrives in the transmission queue of the BS (see FIG. 18, which shows such a high periodicity of downlink pilots needed for conventional CSI acquisition for scheduling and MIMO precoding of short packets).

Moreover, upon the arrival of a delay-sensitive short packet at the BS transmission buffer, typically some or all of the ongoing large-packet transmissions need to be or should be paused/preempted, in order for the transmission of the short packet to take place with minimal multicell interference (and so that its strict delay constraint is more likely to be respected). This typically requires re-computing the MIMO precoder at the BS. If these short-packet arrivals are very frequent, the computational complexity of re-computing the BS MIMO precoders could become prohibitive.

Another kind of special downlink signals are downlink user-specific pilots (in contrast to cell-specific), e.g. Demodulation Reference Signals (DMRS) pilots in LTE (shown in dark grey in FIG. 18). These user-specific pilot signals are sent by the BS along with data symbols in MU-MIMO systems that employ downlink spatial precoding, and they pass through the same precoding that the BS applies to data symbols (thus they are also referred to as precoded pilot signals). In this way, the terminals can learn their respective effective downlink channels, i.e. the scalar channel that is experienced at the terminal side as a result of applying spatial precoding at the BS side. This knowledge of the effective downlink channel is typically necessary for equalization and coherent demodulation purposes at the user terminals.

However, in current wireless systems the precoded pilot signals of ongoing transmissions are not exploited by other terminals, despite the fact that these pilot signals carry information, e.g. how much the MIMO precoders of ongoing transmissions are correlated with the terminal's own channel, which could be useful for subsequent scheduling, MIMO mapping and precoding decisions at the BS. Indeed, exploiting this information comes - as shown later in this document - with no additional cost in terms of downlink pilot signal overhead, and can alleviate the need for too frequent cell-specific pilot transmission.

In summary of the above, an overhead caused by cell-specific pilot signals can get too large, and a frequent re-computation of the MIMO precoder can be too computational complex. Especially in scenarios with delay-constrained short packets. Further, user-specific precoded pilot signals are currently not used to provide channel information to other users. Thus, they also do not support scenarios with delay-constrained short packets.

One existing solution for transmitting delay-sensitive short packets against a background of quasi-continuous long-packet transmissions is to treat the short packets as any other packet (i.e. to not differentiate packets depending on length, application, performance requirements, etc.). In that case, MIMO precoder computation can be done, as for large packets, based either on Precoder Matrix Index (PMI) feedback or based on CSI feedback. For the PMI feedback approach, MIMO pairing decisions are done based on Best Companion Pairing (BCP) and Best Companion Cluster (BCC) feedback. For the CSI feedback approach, the pairing is done based on the CSI feedback that is then exploited to determine the cross-correlation among the channels to the different active user terminals. It is worth mentioning that all these feedback messages, i.e. PMI, BCP, BCC and CSI, are computed at the user terminal side based only on downlink cell-specific pilot signals.

Another existing solution for transmitting delay-sensitive short packets against a background of quasi-continuous long-packet transmissions is "pause-and-resume" preemption. It consists in preempting i.e., pausing, one or more ongoing large-packet transmissions upon small-packet arrival and in using the latest available CSI or PMI about the user terminal to which the small packet is destined to compute its MIMO precoder.

Again, this CSI or PMI is typically acquired at the user terminal side based only on downlink cell-specific pilots and then fed back to the BS.

US 2016/294462 A1 discloses a method and device for setting a beam mode of a base station in a wireless communication system.

US 2017/223689 A1 relates to transmitting and receiving beam information in a wireless communication system.

US 8,238,931 B1 discloses a method and system for dynamic adjustment of auxiliary pilot triggering based on latency.

### SUMMARY

In view of the above-mentioned problems and disadvantages, the present invention aims to improve the existing solutions. The present invention has thereby the object to provide a terminal device, a base station device, and corresponding methods that increase the system throughput, especially when scheduling and MIMO precoding short packets (usually with constraints in terms of delay or deadline to be delivered) against a background of quasi-continuous long-packets. To this end, the present invention intends to reduce the overhead associated with cell-specific pilots. The present invention also aims for a reduction of the computational complexity, which caused by re-computation of a MIMO precoder when MIMO precoding is performed, especially for short packets that can be delivered with low rate. Thereby, the reliability should not be worse than in the existing solutions, and minimal feedback from the terminal device to the base station device should be required. In a preferred application scenario, an improved persistent pause-and-resume mechanism for short-packet transmissions against a background of quasi-continuous long-packet transmissions is another goal of the invention.

The object of the present invention is achieved by the solution provided in the enclosed independent claims. Accordingly, embodiments of the invention are defined by the independent claims. Advantageous implementations of the embodiments of the present invention are further defined in the dependent claims.

In particular, the present invention proposes an improved solution of obtaining CSI at the base station device, particularly for the purposes of scheduling, mapping and MIMO precoding small packets. The solution bases on the computation of a channel similarity metric at the terminal device or the base station device, which measures the similarity between the channel from the base station device to the terminal device and one or more channels from the base station device to other terminal devices with previous or currently ongoing downlink transmissions. Further, the solution may benefit from processing, e.g. thresholding, of the calculated metric, preferably at the terminal device by using instructions signaled by the base station device. Furthermore, the solution may base on feeding back the (processed) similarity metric to the base station device.

Notably, this document focuses in the sequel on the description of MU-MIMO systems using Orthogonal Frequency Division Multiplexing (OFDM) or Single Carrier Frequency Division Multiple Access (SC-FDMA), where the channel can be represented by a regularly spaced time-frequency grid. However, the solutions presented in this document apply also in other scenarios with different transmission schemes. In this context, the problem of designing low-complexity and low-overhead user scheduling, MIMO mapping and MIMO precoder computation schemes is particularly addressed for scenarios with both continuous large-packet and bursty short-packet traffic.

A first aspect of the invention provides a terminal device, configured to calculate a channel similarity metric including one or more channel similarity values, wherein each channel similarity value indicates a degree of similarity between a first channel from a base station device to the terminal device and a second channel from the base station device to another terminal device of one or more other terminal devices, and send a channel similarity feedback message based on the channel similarity metric to the base station device. The channel similarity metric is calculated, for each particular resource block of a plurality of resource blocks, based on terminal-specific precoded pilot signals of ongoing transmissions to each of the one or more other terminal devices scheduled on the particular resource block.

The channel similarity metric indicates how similar the channel of the terminal device is to any other channel to another terminal device. Similarity between two channels may, for instance, be a vector channel co-linearity of the two channels.

One advantage resulting from the terminal device of the first aspect is the possibility of increasing the system throughput compared to existing solutions of CSI acquisition, especially in the scenario of scheduling and MIMO precoding of short packets against a background of large packets. Further, since acquiring the channel similarity metric at the terminal device is achieved based on the precoded user-specific pilot signals (e.g. the downlink DMRS signals) of ongoing transmissions to the other terminal devices, the periodicity of transmitting cell-specific pilot signals can be significantly reduced, while the base station device continues to get up-to-date information from the terminal devices. This also means that the overhead associated with the cell-specific pilots is reduced, which increases the effective system throughput.

Another advantage resulting from the terminal device of the first aspect is the possibility of efficiently achieving a reduction of the computational complexity associated with MIMO precoding of short packets, without sacrificing on reliability and with minimal feedback from the terminal device. Indeed, the channel similarity feedback message allows the base station device to perform, for example, persistent pause-and-resume for the scheduling and MIMO precoding of short packets. Thereby, the base station device does not have to re-compute the MIMO precoder upon a small packet arrival. Since MIMO precoder calculation is typically computationally complex, the advantage of using persistent pause-and-resume for short-packet transmissions becomes clear.

In an implementation form of the first aspect, the terminal device is configured to calculate each channel similarity value based on at least one precoded pilot signal sent from the base station device over the second channel to the other terminal device.

The channel similarity metric has the remarkable property of being computable at the terminal device by using the terminal-specific precoded pilot signals (e.g. DMRS) destined to one or more of the other terminal devices of previous or currently ongoing transmissions. This advantage alleviates the need for too frequent cell-specific pilot signal transmissions, which were previously needed to keep an up-to-date CSI about the terminal devices with bursty-traffic characteristics even during their periods of inactivity.

In a further implementation form of the first aspect, the terminal device is configured to calculate each channel similarity value by de-correlating a sequence, which is defined by samples sensed at positions of resource elements occupied by the at least one precoded pilot signal destined to the other terminal device, with a sequence defined by symbols of the at least one pilot signal.

This allows the terminal device to efficiently calculate a precise channel similarity metric.

In a further implementation form of the first aspect, the terminal device is configured to process the channel similarity metric to obtain channel similarity information, and include the channel similarity information into the channel similarity feedback message.

Thereby, the terminal device can provide the base station device with the relevant information it needs to obtain the above-described advantages. The channel similarity feedback message can be designed to keep the signaling overhead low.

In a further implementation form of the first aspect, the terminal device is configured to determine a maximum similarity value from a plurality of channel similarity values included in the channel similarity metric, wherein the channel similarity information indicates the second channel related to the maximum similarity value.

In particular, the channel similarity information indicates the second channel from which the maximum similarity value was obtained. Thus, the most similar channel to another terminal device can be calculated with respect to the channel of the terminal device. With this implementation form, for instance, persistent pause-and resume preempting can be efficiently performed at the base station device in scenarios of scheduling and transmitting short packets.

In a further implementation form of the first aspect, the terminal device is configured to perform thresholding on each channel similarity value based on a determined threshold value, wherein the channel similarity information indicates a result of the thresholding related to a plurality of second channels.

In this implementation form, only indices of the channels that yield a high similarity value may be reported back to the base station device, thus keeping the signaling overhead low.

In a further implementation form of the first aspect, the terminal device is configured to store a list of a plurality of threshold values, and select the determined threshold value from the list of threshold values based on a channel similarity threshold message received from the base station device.

Thereby, it can be ensured that the calculated channel similarity metric is high enough for the base station device to decide whether to continue using the same precoder, for instance, for a short packet transmission, which precoder was previously used for a preempted large packet transmission. Thus, the computational complexity can be reduced.

In a further implementation form of the first aspect, the terminal device is configured to compare each channel similarity value with the determined threshold value, wherein the channel similarity information indicates only each second channel related to a channel similarity value higher than the determined threshold value.

Thus, the signaling overhead can be further reduced. In particular, the channel similarity information indicates only each second channel resulting in a channel similarity value higher than the determined threshold value.

A second aspect of the present invention provides a base station device, configured to obtain channel similarity information indicating a degree of similarity between a first channel from the base station device to a terminal device of interest and at least one second channel from the base station device to another terminal device, perform scheduling, or scheduling and MIMO precoding, for a packet to be transmitted to the terminal device of interest based on the channel similarity information.

Further, the base station device is configured to receive a channel similarity feedback message including the channel similarity information from the terminal device of interest, and/or calculate, as the channel similarity information, a channel similarity metric including at least one channel similarity value, wherein each channel similarity value indicates a degree of similarity between the first channel and a second channel.

In other words, the relevant channel similarity information is obtained at the base station device side or at the terminal device side.

Further, the base station device is configured to calculate each channel similarity value based on channel state information about the channel to the terminal device of interest and the at least one second channel to the other terminal device.

Further, the base station device is configured to produce a scheduling and preempting command, or a scheduling and preempting command and a MIMO precoder computing command, based on the channel similarity information.

Further, the base station is configured to schedule a packet to be transmitted to the terminal device of interest on at least one time-frequency resource that was to be used to transmit to another terminal device having a channel similarity value with respect to the terminal device of interest that is the highest value among the channel similarity values related to the terminal device of interest or that is larger than a threshold related to the terminal device of interest, after pausing transmission to said other terminal device.

In a further implementation form of the second aspect, the base station device is configured to use, for the packet to be transmitted to the terminal device of interest, a MIMO precoder equal to the MIMO precoder that was to be used to transmit the paused transmission to the other terminal device, or equal to a scaled version of said MIMO precoder.

In a further implementation form of the second aspect, the base station device is configured to send a channel similarity threshold message indicating a determined threshold value to the terminal device of interest.

In a further implementation form of the second aspect, the base station device is configured to store a list of a plurality of threshold values, and select the determined threshold to indicate to the terminal device of interest based on a target performance of that terminal device, including possibly a target delay/latency performance, or a largest signal interference level tolerable by that terminal device.

The base station device of the second aspect and its implementation forms achieve the advantages described above for the terminal device, in particular due to the knowledge of the channel similarities. In particular, the base station device achieves a higher system throughput for scheduling and MIMO precoding of short packets, in particular by reducing the overhead of cell-specific pilot signals. Further, the base station device achieves a reduction of the computational complexity, since frequent MIMO precoder re-computation is not necessary.

A third aspect of the present invention provides a method for a terminal device comprising calculating a channel similarity metric including one or more channel similarity values, wherein each channel similarity value indicates a degree of similarity between a first channel from a base station device to the terminal device and a second channel from the base station device to another terminal device of one or more other terminal devices, and sending a channel similarity feedback message based on the channel similarity metric to the base station device. The channel similarity metric is calculated, for each respective resource block of a plurality of resource blocks, based on terminal-specific precoded pilot signals of ongoing transmissions to each of the one or more other terminal devices scheduled on the respective resource block.

The method of the third aspect achieves the same advantages and effects as the terminal device of the first aspect. The method can be developed with implementation forms that correspond to the respective implementation forms described above for the terminal device of the first aspect.

In particular, in an implementation form of the third aspect, the method comprises calculating each channel similarity value based on at least one precoded pilot signal sent from the base station device over the second channel to the other terminal device.

In a further implementation form of the third aspect, the method comprises calculating each channel similarity value by de-correlating a sequence, which is defined by samples sensed at positions of resource elements occupied by the at least one precoded pilot signal destined to the other terminal device, with a sequence defined by symbols of the at least one pilot signal.

In a further implementation form of the third aspect, the method comprises processing the channel similarity metric to obtain channel similarity information, and including the channel similarity information into the channel similarity feedback message.

In a further implementation form of the third aspect, the method comprises determining a maximum similarity value from a plurality of channel similarity values included in the channel similarity metric, wherein the channel similarity information indicates the second channel related to the maximum similarity value.

In a further implementation form of the third aspect, the method comprises performing thresholding on each channel similarity value based on a determined threshold value, wherein the channel similarity information indicates a result of the thresholding related to a plurality of second channels.

In a further implementation form of the third aspect, the method comprises storing a list of a plurality of threshold values, and selecting the determined threshold value from the list of threshold values based on a channel similarity threshold message received from the base station device.

In a further implementation form of the third aspect, the method comprises comparing each channel similarity value with the determined threshold value, wherein the channel similarity information indicates only each second channel related to a channel similarity value higher than the determined threshold value.

A fourth aspect of the present invention provides a method for a base station device, comprising obtaining channel similarity information indicating a degree of similarity between a first channel from the base station device to a terminal device of interest and at least one second channel from the base station device to another terminal device, performing scheduling, or scheduling and MIMO precoding for a packet to be transmitted to the terminal device of interest based on the channel similarity information.

Further, the method comprises receiving a channel similarity feedback message including the channel similarity information from the terminal device of interest, and/or calculating, as the channel similarity information, a channel similarity metric including at least one channel similarity value, wherein each channel similarity value indicates a degree of similarity between the first channel and a second channel.

Further, the method comprises calculating each channel similarity value based on channel state information about the channel to the terminal device of interest and the at least one second channel to the other terminal device.

Further, the method comprises producing a scheduling command, a preempting command, and/or a MIMO precoder computing command based on the channel similarity information.

Further, the method comprises scheduling a packet to be transmitted to the terminal device of interest on at least one time-frequency resource that was to be used to transmit to another terminal device having a channel similarity value with respect to the terminal device of interest that is the highest value among the channel similarity values related to the terminal device of interest or that is larger than a threshold related to the terminal device of interest, after pausing transmission to said other terminal device.

The method of the fourth aspect achieves the same advantages and effects as the base station device of the second aspect. The method can further be developed with implementation forms that correspond to the respective implementation forms of the base station device of the second aspect.

In a further implementation form of the fourth aspect, the method comprises using, for a packet to be transmitted to the terminal device of interest, a MIMO precoder equal to the MIMO precoder that was to be used to transmit the paused transmission to the other terminal device, or equal to a scaled version of said MIMO precoder.

In a further implementation form of the fourth aspect, the method comprises sending a channel similarity threshold message indicating a determined threshold value to the terminal device of interest.

In a further implementation form of the fourth aspect, the method comprises storing a list of a plurality of threshold values, and selecting the determined threshold to indicate to the terminal device of interest based on a target performance of that terminal device or a largest signal interference level tolerable by that terminal device.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

In a further implementation form of the fourth aspect, the method comprises using, for a packet to be transmitted to the terminal device of interest, a MIMO precoder equal to the MIMO precoder that was to be used to transmit the paused transmission to the other terminal device, or equal to a scaled version of said MIMO precoder.

In a further implementation form of the fourth aspect, the method comprises sending a channel similarity threshold message indicating a determined threshold value to the terminal device of interest.

In a further implementation form of the fourth aspect, the method comprises storing a list of a plurality of threshold values, and selecting the determined threshold to indicate to the terminal device of interest based on a target performance of that terminal device or a largest signal interference level tolerable by that terminal device.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.
- FIG. 9: shows persistent pause-and-resume of a base station device according to an embodiment of the present invention based on similarity feedback with maximum-value post-processing.
- FIG. 10: shows a channel similarity computation at a terminal device according to an embodiment of the present invention using downlink DMRS and thresholding post-processing.
- FIG. 11: shows a similarity metric feedback message of a terminal device according to an embodiment of the present invention in case of thresholding post-processing.
- FIG. 12: shows persistent pause-and-resume of a base station device according of an embodiment of the present invention based on similarity feedback with thresholding post-processing.
- FIG. 13: shows a gain in average URLLC latency achieved by the embodiments according to the present invention.
- FIG. 14: shows a gain in spectral efficiency due to better MIMO pairing achieved by the embodiments according to the present invention.
- FIG. 15: shows a trade-off between precoder updating rate and URLLC reliability by means of controlling the value of the channel similarity (co-linearity) threshold.
- FIG. 16: shows a trade-off between eMBB throughput and URLLC reliability by means of controlling the level of eMBB preempting through the orthogonality threshold value.
- FIG. 17: shows an example of packet arrivals at a base station device in scenarios with both large packets and short packets.
- FIG. 18: shows a high periodicity of downlink pilot signals needed for conventional CSI acquisition for scheduling and MIMO precoding of short packets.

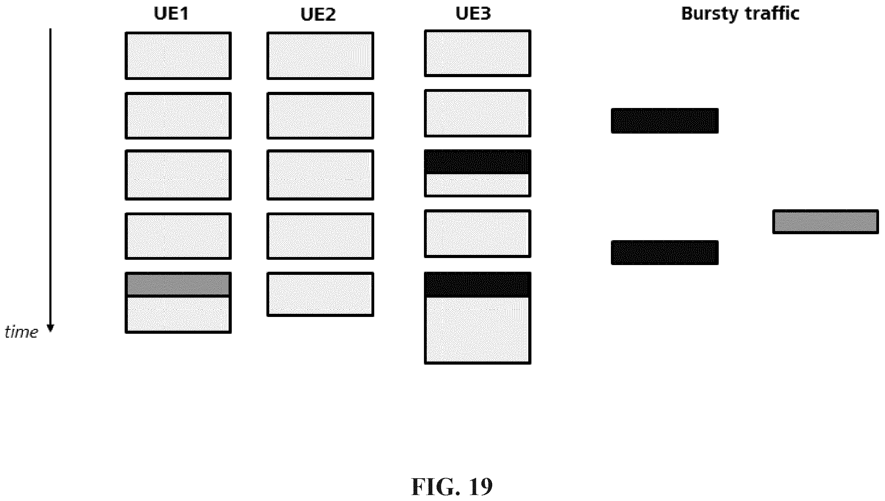

- FIG. 19: shows conventional pause-and-resume preempting of ongoing large-packet transmissions.

### DETAILED DESCRIPTION OF THE EMBODIMENTS

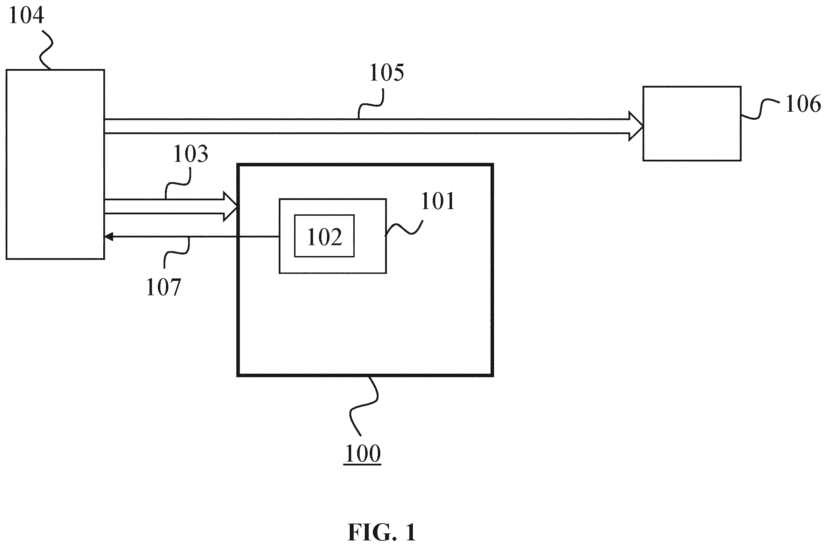

FIG. 1 shows a terminal device 100, e.g. a user terminal like a UE, according to an embodiment of the present invention. The terminal device 100 is usable for channel similarity acquisition.

In particular, the terminal device 100 is configured to calculate a channel similarity metric 101 including at least one channel similarity value 102. Each channel similarity value 102 in the metric 101 indicates a degree of similarity between a first channel 103 from a base station device 104 to the terminal device 100 and a second channel 105 from the base station device 104 to another terminal device 106. For instance, the terminal device 100 may calculate the metric 101 based on at least one precoded pilot signal sent from the base station device 104 over the second channel 105 to the other terminal device 106. The other terminal device 106 may be configured like the terminal device 100 to acquire channel similarities.

The terminal device 100 is further configured to send a channel similarity feedback message 107 based on the calculated channel similarity metric 101 to the base station device 104. The feedback message 107 may include the calculated metric 101. The feedback message 107 may also include channel similarity information, which is obtained by the terminal device 100 by processing the channel similarity metric 101. Such processing may include performing thresholding on each similarity value 102 of the metric 101 based on a given threshold value, or may include determining a maximum similarity value 102 in the metric 101.

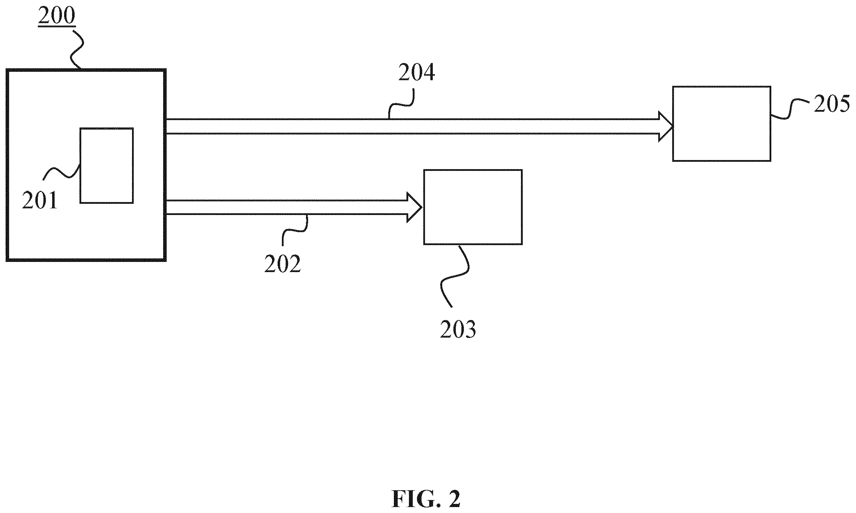

FIG. 2 shows a base station device 200 (which may be a device or module included in a BS or BS system or may be a BS), according to an embodiment of the present invention. The base station device 200 is usable for channel similarity acquisition. The base station device 200 may particularly be the base station device 104 shown in FIG. 1.

The base station device 200 is configured to obtain channel similarity information 201 indicating a degree of similarity between a first channel 202 from the base station device 200 to a terminal device of interest 203 and at least one second channel 204 from the base station device 200 to another terminal device 205. Notably, the terminal device of interest 203 may be the terminal device 100 of FIG. 1, and the other terminal device 205 may be the other terminal device 106 of FIG. 1. Accordingly, the first channel 202 may be the first channel 103 of FIG. 1, and the second channel 204 may be the second channel 105 of FIG. 1.

The base station device 200 is further configured to perform scheduling and/or MIMO precoding for a packet to be transmitted to the terminal device of interest 203 based on the channel similarity information 201. The channel similarity information 201 may be calculated by the base station device 200, e.g. it may be a channel similarity metric 101 as described above or may be a result of processing such a metric 101. Alternatively, the channel similarity information 201 may be received form the terminal device of interest 203, e.g. in a channel similarity feedback message 107 as described above with respect to FIG. 1.

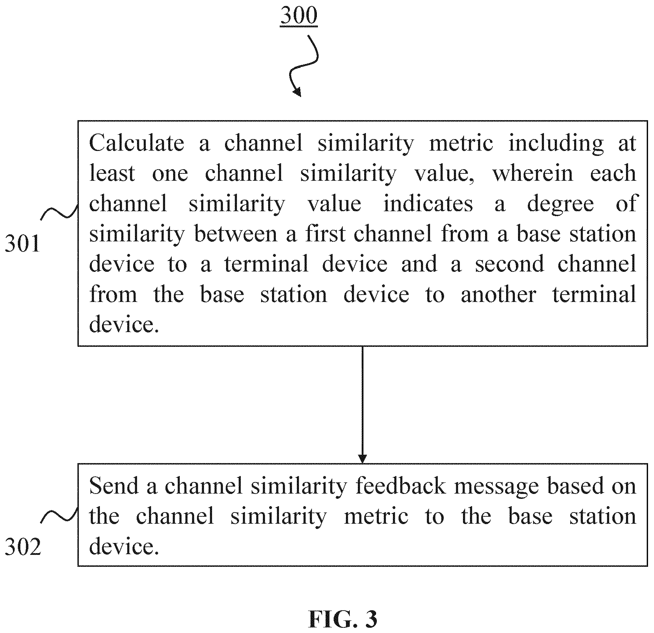

FIG. 3 shows a method 300 according to an embodiment of the present invention. The method 300 is for a terminal device, i.e. it is carried out by e.g. the terminal device 100 of FIG. 1. The method comprises a step 301 of calculating a channel similarity metric 101 including at least one channel similarity value 102, wherein each channel similarity value 102 indicates a degree of similarity between a first channel 103 from a base station device 105 to the terminal device 100 and a second channel 104 from the base station device 105 to another terminal device 106. Further, the method 200 comprises a step 302 of sending a channel similarity feedback message 107 based on the channel similarity metric 101 to the base station device 105.

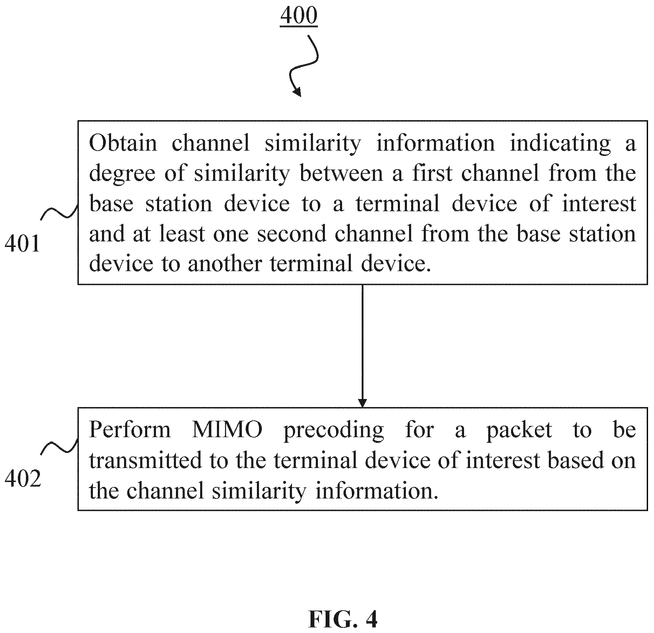

FIG. 4 shows a method 400 according to an embodiment of the present invention. The method 400 is for a base station device, i.e. it is carried out by e.g. the base station device 200 of FIG. 2. The method 400 comprises a step 401 of obtaining channel similarity information 201 indicating a degree of similarity between a first channel 202 from the base station device 200 to a terminal device of interest 203 and at least one second channel 204 from the base station device 200 to another terminal device 205. The method 400 also comprises a step 401 of performing scheduling and/or MIMO precoding for a packet to be transmitted to the terminal device of interest 203 based on the channel similarity information 201.

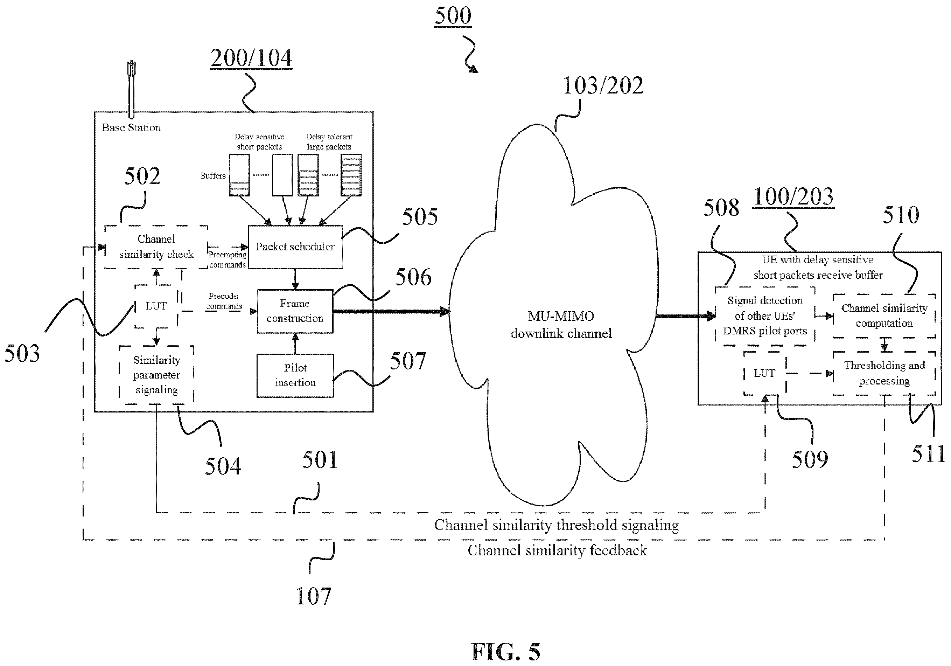

FIG. 5 shows a system 500 including a terminal device 100 according to an embodiment of the present invention and a base station device 200 according to an embodiment of the present invention. The terminal device 100 of the system 500 builds on the terminal device 100 shown in FIG. 1 (and may be the terminal device of interest 203 shown in FIG. 2). The base station device 200 of the system 500 builds on the base station device 200 shown in FIG. 2 (and may be the base station device 104 shown in FIG. 1). Accordingly, same elements in FIG. 1, FIG. 2 and FIG. 5 are labeled with the same reference signs and function likewise. The channel 103/202 from the base station device 200/104 to the terminal device 100/203 is the first channel 103 shown in FIG. 1 and the first channel 202 shown in FIG. 2, respectively. The system 500 of FIG. 5 shows particularly how the embodiments according to the present invention are integrated into a MU-MIMO system. The shown blocks that are drawn with dashed lines represent new functionalities of the system 500 that support the solution of the present invention.

In particular, at the terminal device 100, a "DMRS signal detection" block 508 may be configured to listen to terminal-specific precoded pilot signals (e.g. DMRS signals) of ongoing transmissions to other terminal devices (e.g. the terminal devices 106 and 205 shown in FIG. 1 and FIG. 2, respectively), in order to determine a level of cross-correlation between the MIMO precoders of these transmissions and the channel 103/202 from the base station device 200 to the terminal device 100. For instance, measuring at the terminal device 100 with index *k* the received signal associated with a DMRS port precoded with ***wⱼ**,* the MIMO precoder destined to another terminal device *j,* the terminal device 100 with index *k* can determine the value of ${w}_{j}^{T} {h}_{k}$*.*

Based on the output of this "DMRS signal detection" block 508, a "channel similarity computation" block 510 may be configured to estimate the channel similarity metric 101 between the channel 103/202 of the terminal device 100 and the channels of the other terminals to which a current transmission is destined. The channel similarity metric 101 between the vector channels of terminal devices with index *k* and *j* could be for instance be obtained by scaling the output of the "DMRS signal detection" block 508 as follows: ${ρ}_{k , j} = \frac{\left|{w}_{j}^{T}{h}_{k}\right|}{\left‖{w}_{j}\right‖ \left‖{h}_{k}\right‖}$

Indeed, *∥**h**ₖ*∥ can be estimated from downlink cell-specific pilots. Furthermore, assuming equal power allocation (EPA), $\left‖{w}_{j}\right‖ = \sqrt{{P}^{BS} / N}$ (where *N* is the number of transmission layers and *P*^{BS} is the transmit power of the base station device 200). Optionally, the output of the "channel similarity computation" block 510, i.e. the channel similarity metric 101, can be processed before being fed back to the base station device 200. It may, for instance, be processed in a "thresholding and processing" block 511 that then sends the channel similarity feedback message 107. For instance, this block 511 can be configured to compute the maximum similarity value among the set of similarity values 102 in the metric 101 that is computed by the "channel similarity computation" block 510. Alternatively, the block 511 can be configured to compare these values 102 to a threshold value provided preferably by a "Look-Up Table (LUT)" block 509. The relevant entry from the LUT block 509 can preferably be determined based on a channel similarity threshold signaling message 501 sent by the base station device 200 to the terminal device 100, either using a periodic broadcast transmission and/or during the initial access protocol of the terminal device 100. The output of the "thresholding and processing" block 511 is then fed back to the base station device 200 using the channel similarity feedback message 107. This message 107 can either replace CSI feedback messages during some sub-frames or accompany them during others. The network can also decide to instruct the terminal device 100 to send a channel similarity feedback message 107 only during sub-frames, during which no CSI feedback message is scheduled.

At the base station device 200, a "channel similarity check" block 502 may be configured to obtain channel similarity information 201, either by computing (e.g. like described above) a channel similarity metric 101 in case that the terminal device 100 does not feedback any channel similarity information (but feeds back instead some kind of CSI) or, in the other case, by receiving the message 107 with the (possibly processed) channel similarity metric 101 from the terminal device 100. In the case of vector CSI feedback from two user terminals, say channel vectors ***h**ₖ* and ***h**ⱼ* from terminals *k* and *j,* the channel similarity metric 101 can be defined as the vectors co-linearity coefficient *ρ_{k,j}* computed as: ${ρ}_{k , j} = \frac{\left|{h}_{k}^{H}{h}_{j}\right|}{\left‖{h}_{k}\right‖ \left‖{h}_{j}\right‖} .$

In both cases, this block 502 processes the channel similarity information 201 to produce scheduling/preempting commands and/or MIMO precoder computing commands. More precisely, the output of the "channel similarity check" block 502 is preferably connected to a packet scheduler 505, in order to give the latter scheduling and preempting commands. Indeed, the channel similarity check block 502 output provides information about the level of cross-correlation among the channels to the different terminal device, an information that is relevant for MIMO mapping and scheduling. For instance, the base station device 200 can decide to pause an ongoing transmission to a terminal device, whose channel is too correlated to the channel of an incoming delay-sensitive short packet, in order to avoid the high interference that this strong correlation could have impact on the destination of the short packet.

The output of the "channel similarity check" block 502 is preferably also connected to the input of a frame construction circuitry 506, in order to give MIMO precoder computation commands. Indeed, in absence of full CSI for some or all of the channels of the terminal devices to be mapped together, the channel cross-correlation information provided by the "channel similarity check" block 502 can serve in determining the MIMO precoders for co-scheduled terminal devices. For instance, the base station device 200 can decide based on this information to continue using the same precoder previously used for a preempted large-packet transmission (or a scaled version of it) for an incoming short packet, whose channel similarity to the preempted channel is high enough. In that case, the threshold needed to determine whether a channel similarity metric 101 is high enough should be a function of the target reliability and spectral efficiency (or any other relevant key performance indicator) of the MIMO transmission, of the number of MIMO layers and of the channel statistics. Based on these parameters, the relevant entry from a "LUT" block 503 is preferably consulted to determine the above-mentioned threshold (or any other relevant information) for MIMO precoder computation. The threshold that has been extracted from the LUT block 503 is also communicated to a "similarity parameter signaling" block 504 that is configured to takes care of signaling its value to the active terminal devices. In particular, the block 504 is configured to send a channel similarity threshold message 501 to the terminal device 100.

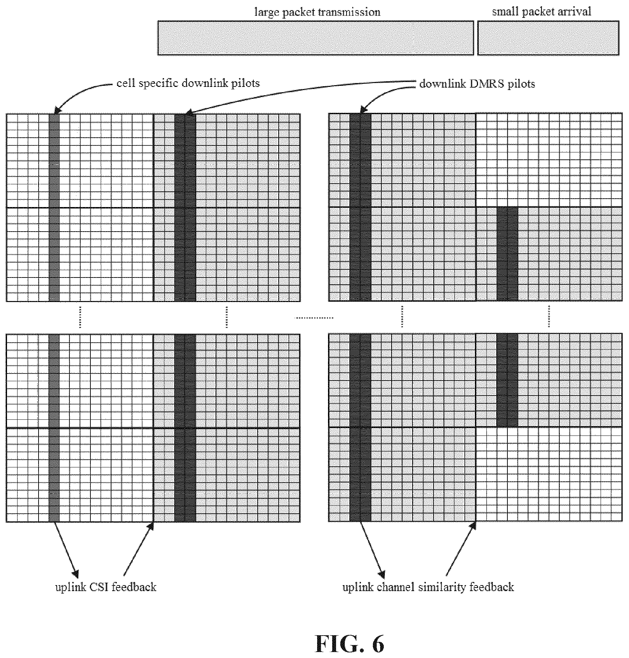

FIG. 6 shows an advantageous result that can be achieved with the system 500 shown in FIG. 5, and respectively with the terminal device 100 shown in FIG. 1 and the base station device 200 shown in FIG. 2. In particular, FIG. 6 shows a lower periodicity of downlink pilot signals, which is achieved by the embodiments. Especially the need for too frequent cell-specific pilot signals is alleviated, while the base station device 200 can still be provided up-to-date CSI about the terminal devices with bursty traffic, even during their periods of inactivity. A comparison of FIG. 6 and FIG. 18 shows that cell-specific downlink pilots are sent less frequently in FIG. 6. Instead, the terminal-specific downlink DMRS pilots are used to produce uplink feedback.

A first specific implementation of embodiment according to the present invention is now described. This specific implementation achieves the channel similarity acquisition by using downlink DMRS signals (precoded pilot signals) and maximum-value post-processing.

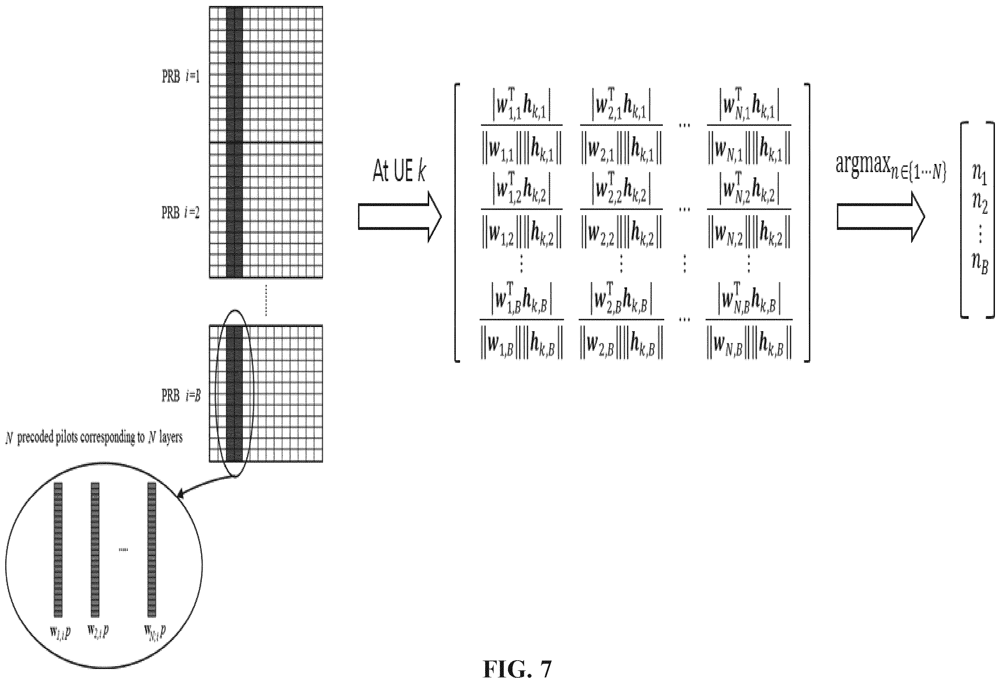

In particular, as shown in FIG. 7 (left), in this specific implementation, the *N* DMRS signals on each of a number *B* ≥ 1 of Resource Blocks (RBs; decided in advance by the network) are sensed at the terminal device 100 e.g., by using a simple energy detection method. The index of the port yielding the highest channel similarity measurement e.g., the one yielding the largest value at the output of the energy detectors, for each one of the B RBs is then reported to the base station device 200. FIG. 7 shows a channel similarity computation at the terminal device 100 (UE *k*) for this specific implementation. The DMRS signals and a maximum-value post-processing ("argmax") are used to obtain the channel similarity metric 101.

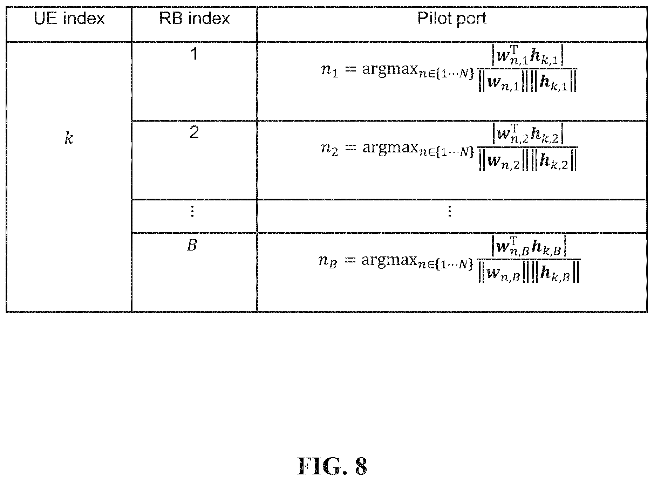

The terminal device 100 compares its own channel to channels to other terminal devices for each RB index, and feedbacks the best match for each RB index. The channel similarity feedback message 107 associated with this specific implementation has thus the structure shown in FIG. 8.

With this feedback message 107 of FIG. 8, persistent pause-and-resume preempting can be performed at the base station device 200, especially useful for the scheduling and transmission of short packets. Indeed, the base station device 200 can choose one or several RBs, on which to transmit a short packet. Next, the most recent similarity feedback message 107 (see FIG. 8) can be consulted to determine the ongoing transmission that has to be paused (preempted) to make place for the arriving packet. This is done based on the pilot ports reported in the message 107 of FIG. 8, and which correspond to the RBs assigned to the short packet.

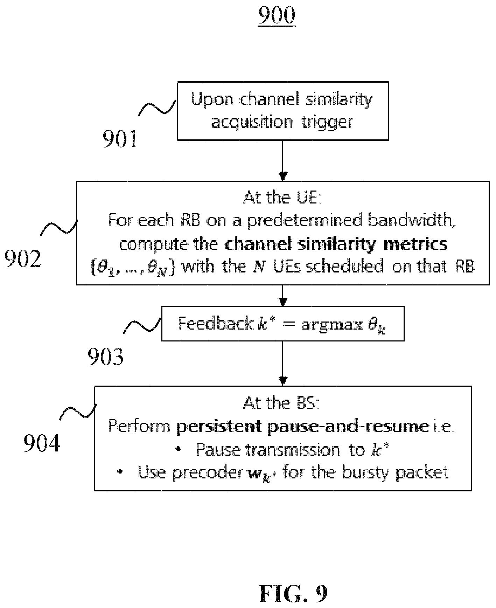

The 'persistent' property of this implementation is summarized by the method 900 shown in FIG. 9, and is due to the fact that, with this specific implementation, the base station device 200 can decide to keep the MIMO precoder of the preempted transmission and use it for the transmission of the short packet, thus significantly reducing MIMO precoding computational complexity. In step 901, a channel similarity acquisition by the terminal device 100 is triggered by the base station device 200. In step 902, the terminal device 100 computes the channel similarity metric 101 on an RB and with respect to N other terminal devices. In step 903 the terminal device 100 feeds back the post-processed metric 101 ("argmax" as described above) with the message 107. In step 904 the base station device 200 performs persistent pause-and-resume based on the fed back message 107.

A second specific implementation is now described. This implementation achieves the channel similarity acquisition using downlink DMRS signals and thresholding post-processing.

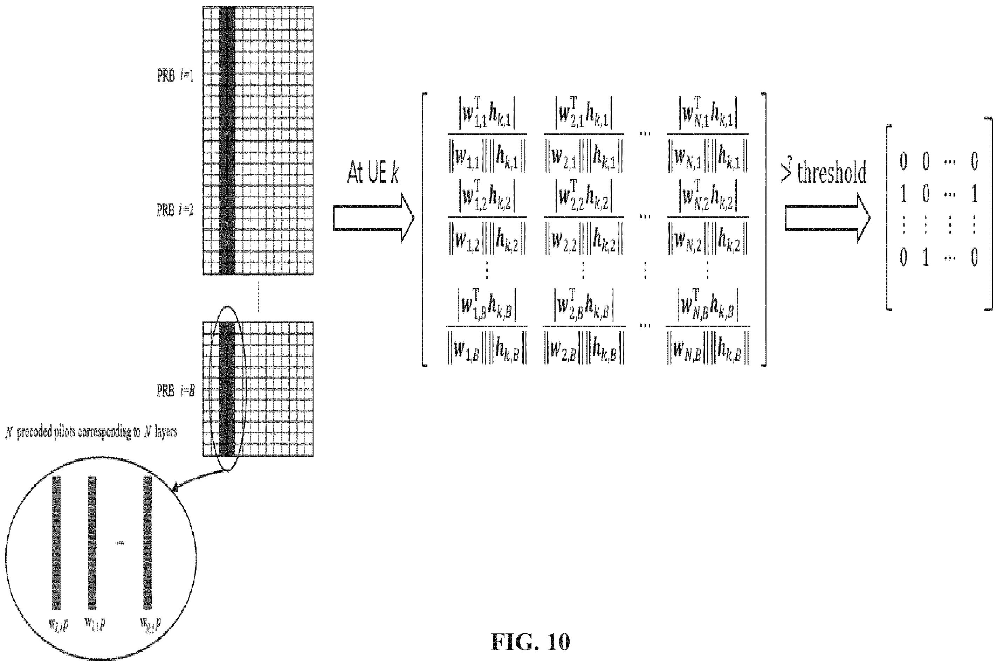

In this implementation, as shown in FIG. 10, only the indexes of the DMRS ports that yield a similarity value higher than a predefined threshold (preferably signaled by the base station device 200) are reported to the base station device 200.

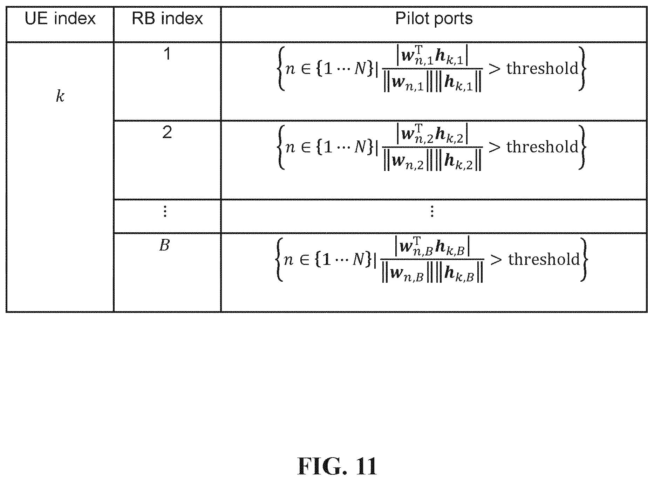

The channel similarity feedback message 107 associated with this specific implementation has the structure shown in FIG. 11. In contrast to the structure of the message 107 shown in FIG. 8, the pilot port field in this message 107 can contain more than one value, or no values at all.

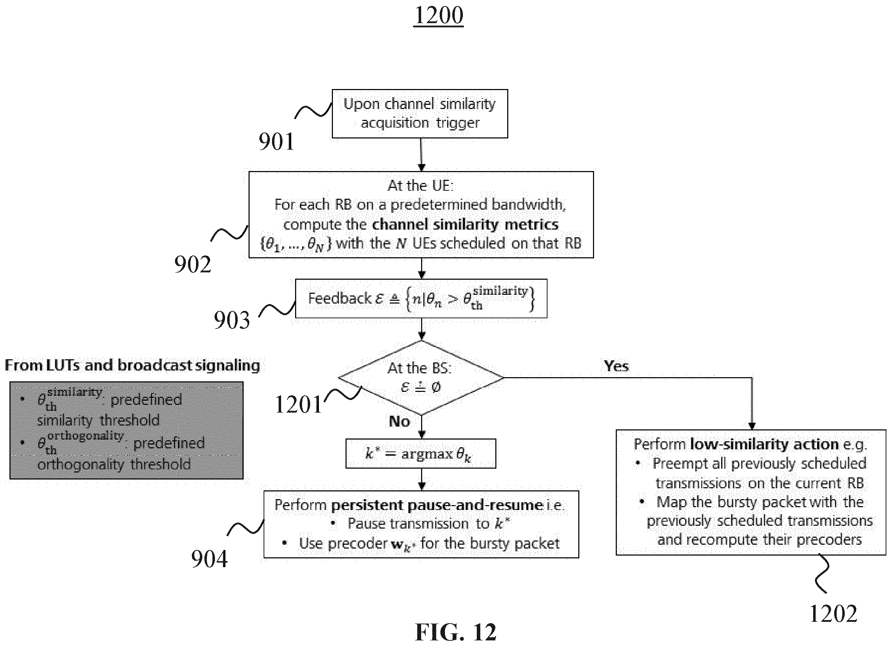

With this feedback message 107, a more reliable persistent pause-and-resume scheduling (see method 1200 in FIG. 12) can be performed. This additional reliability is the result of the possibility of applying persistent pause-and-resume (step 904, already explained above) transmission on a given RB, only if the pilot port field corresponding to the RB in the similarity feedback message 107 is not empty. If the field is empty, preempting more than one ongoing transmission could be necessary to guarantee the reliability of short-packet transmission by keeping the multiuser interference level at acceptable values. The method 1200 again includes the triggering step 901, and the calculation step 902 yielding the metric 101. The feedback step 903 is different as to the different feedback message 107 described above. Then in step 1201, the base station device 200 checks whether the field is empty.

If yes, then the base station device performs 1202 a low similarity action, in which it preempts all previously scheduled transmissions on the current RB, and maps the bursty packet with the previously scheduled transmission and re-computes their precoders. If no, then the base station device performs the persistent pause-and-resume step 904.

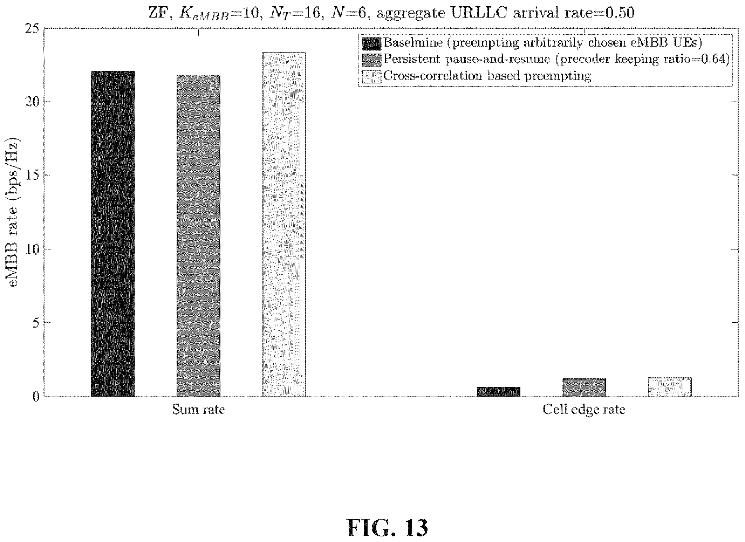

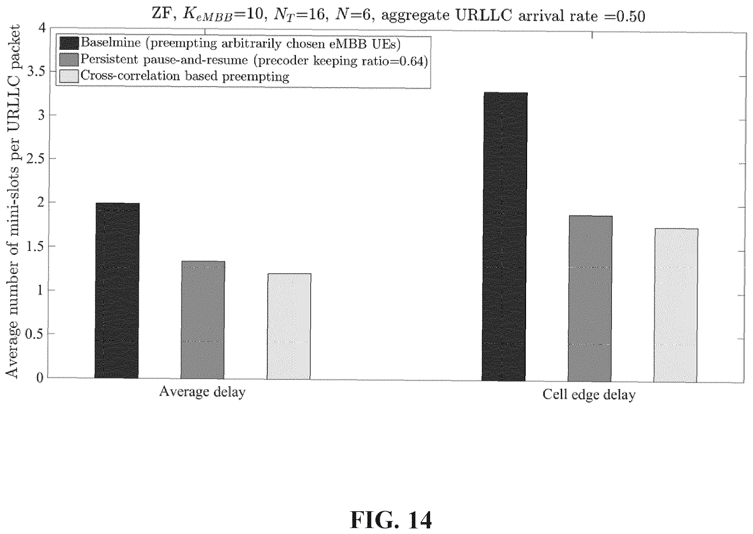

In the following, the performance advantages of the "persistent pause-and-resume" scheme in terms of delay (FIG. 13) and throughput (FIG. 14) are numerically validated. The results have been obtained assuming 16 antennas at the base station device 200 and the so-called physical channel model. Also assumed is a pool of 10 eMBB UEs (terminal devices running large-packet services) and 10 URLLC UEs (terminal devices running short-packet delay sensitive services) whose distances to the base station device 200 are uniformly distributed in the interval [0, cell radius]. The MIMO transmitter at the base station device 200 is a Zero Forcing (ZF) precoder, which can support up to *N* = 6 spatial layers. Finally, a short packet is assumed to be correctly received, if the Signal-to-Interference-plus-Noise Ratio (SINR) at its destination terminal device is larger than a certain threshold that is MCS dependent (assumed to be equal to 0 dB in the sequel). The simulation parameters are summarized in the below table.

| **Parameter** | **Value** |
|---|---|
| Carrier frequency | 900 MHz |
| Path loss model | COST-231 Hata |
| Cell radius | 400 m |
| Channel model | Physical channel model (number of spatial dimensions=4) |
| BS antenna array size | 16 |
| UE antenna number | 1 |
| UE antenna element pattern | Omni-directional |
| Channel Estimation | Ideal |
| MCS target SINR | 0 dB |
| HARQ scheme | Type-I HARQ (repetitions) |
| Maximum number of HARQ rounds | 8 |
| MIMO precoder | Zero forcing |

Next the performance gains in terms of average delay (average number of HARQ rounds per packet) and throughput (both large-packet sum and cell edge spectral efficiencies) are shown assuming a URLLC arrival rate equal to 1 short-packet new arrival in average every two transmission time intervals (TTIs).

Notably the above gains are obtained while the MIMO precoder at the base station device 200 is kept the same upon 64% of URLLC packet arrivals. In other words, the solution of the invention not only yields performance gains in rate and delay, but also in computational complexity reduction. It is worth mentioning that the MIMO precoder keeping ratio can be further increased to 100% (which is their highest possible decrease of computational complexity) by means of "aggressive preempting" at the price of a slight decrease in eMBB sum rate. Furthermore, the above gains are achieved only relying on channel similarity feedback, a feature that translates into a possible decrease in downlink pilots' periodicity (and hence of downlink pilots overhead).

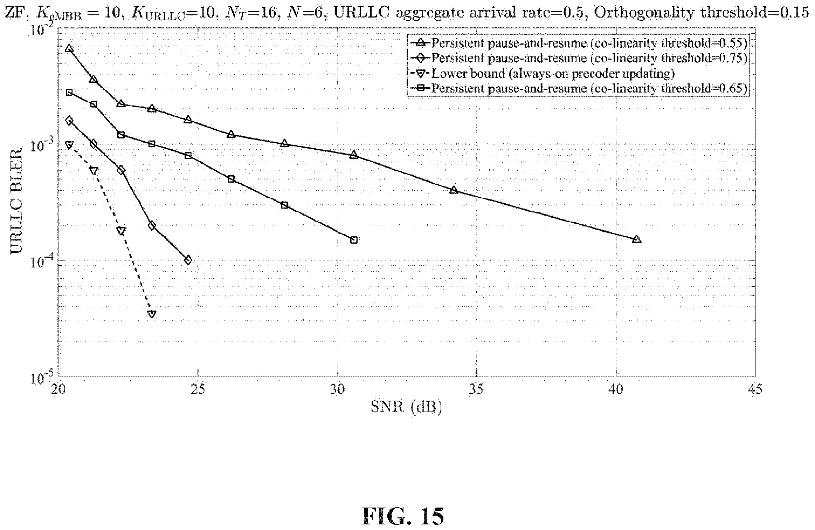

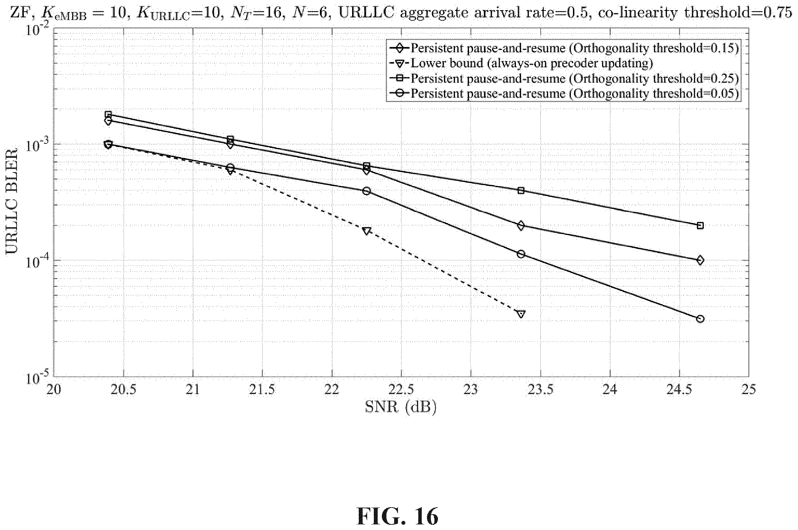

FIGs. 15 and 16 show that the above gains in terms of delay, throughput and computational complexity are all achieved while the reliability performance of URLLC packet delivery remains at the same time within acceptable margins. Indeed, the channel similarity threshold and the channel orthogonality threshold (see FIG. 12) can be set to values that achieve a desired tradeoff among URLLC reliability, MIMO precoder computational complexity and eMBB throughput.

Of course, controlling the above mentioned tradeoff is only possible if the values of the two threshold parameters are signaled by the BS to the user terminals as is explained above for the second specific implementation.

The solution of the present invention achieves significant advantages. One advantage is the possibility of increasing the system throughput as compared to existing solutions of CSI acquisition, especially for the purposes of scheduling and MIMO precoding of short packets. Indeed, acquiring channel similarity measurements at the terminal device 100 can be done, as shown above, by relying on the downlink DMRS signals of ongoing transmissions to other terminal devices 105. This feature means that the periodicity of transmitting cell-specific pilots e.g., CSI-RS, can be reduced (compare FIG. 6 with FIG. 17) while the base station device 200 continues to get up-to-date channel similarity measurements from the terminal devices 100, 106. The overhead associated with cell-specific pilots is thus reduced and the effective system throughput is increased.

Another advantage of the channel similarity feedback is the possibility of efficiently achieving reduction of the computational complexity associated with MIMO precoding of short packets without losing in terms of reliability and with minimal feedback from the terminal devices 100, 106. Indeed, channel similarity feedback makes it possible for the base station device 200 to perform persistent pause-and-resume for the scheduling and MIMO precoding of short packets. With this transmission technique, the base station device 200 does not have to re-compute the MIMO precoder upon a small packet arrival. Since MIMO precoder calculation is typically computationally complex, the advantage of using persistent pause-and-resume for short-packet transmissions becomes clear.

The present invention has been described in conjunction with various embodiments as examples as well as implementations. In the claims as well as in the description the word "comprising" does not exclude other elements or steps and the indefinite article "a" or "an" does not exclude a plurality. A single element or other unit may fulfill the functions of several entities or items recited in the claims.

## Claims

1. A terminal device (100), configured to
calculate a channel similarity metric (101) including one or more channel similarity values (102), wherein each channel similarity value (102) indicates a degree of similarity between a first channel (103) from a base station device (104) to the terminal device (100) and a second channel (105) from the base station device (104) to another terminal device (106) of one or more other terminal devices (106), and
send a channel similarity feedback message (107) based on the channel similarity metric (101) to the base station device (104),
wherein the channel similarity metric (101) is calculated, for each particular resource block of a plurality of resource blocks, based on terminal-specific precoded pilot signals of ongoing transmissions to each of the one or more other terminal devices (106) scheduled on the particular resource block.

2. The terminal device (100) according to claim 1, configured to
process the channel similarity metric (101) to obtain channel similarity information (201), and
include the channel similarity information (201) into the channel similarity feedback message (107).

3. The terminal device (100) according to claim 2, configured to
perform thresholding on each channel similarity value (102) based on a determined threshold value,
wherein the channel similarity information (201) indicates a result of the thresholding related to a plurality of second channels (105).

4. The terminal device (100) according to claim 3, configured to
store a list (509) of a plurality of threshold values, and
select the determined threshold value from the list (509) of threshold values based on a channel similarity threshold message (501) received from the base station device (104).

5. The terminal device (100) according to claim 3 or 4, configured to
compare each channel similarity value (102) with the determined threshold value,
wherein the channel similarity information (201) indicates only each second channel (105) related to a channel similarity value (102) higher than the determined threshold value.

6. A base station device (200), configured to
obtain channel similarity information (201) indicating a degree of similarity between a first channel (202) from the base station device (200) to a terminal device of interest (203) and at least one second channel (204) from the base station device (200) to another terminal device (205),
perform scheduling, or scheduling and Multiple Input Multiple Output, MIMO, precoding, for a packet to be transmitted to the terminal device (203) of interest based on the channel similarity information (201),
wherein the base station device (200) is further configured to:
receive a channel similarity feedback message (107) including the channel similarity information (201) from the terminal device of interest (203);
produce a scheduling command, or a preempting command and a MIMO precoder computing command, based on the channel similarity information (201); and
schedule a packet to be transmitted to the terminal device (203) of interest on at least one time-frequency resource that was to be used to transmit to another terminal device (205) having a channel similarity value with respect to the terminal device of interest (203) that is the highest value among the channel similarity values (102) related to the terminal device of interest (203) or that is larger than a threshold related to the terminal device of interest (203), after pausing transmission to said other terminal device (205).

7. The base station device (200) according to claim 6, further configured to
use, for the packet to be transmitted to the terminal device of interest (203), a MIMO precoder equal to the MIMO precoder that was to be used to transmit the paused transmission to the other terminal device (205), or equal to a scaled version of said MIMO precoder.

8. The base station device (200) according to one of claims 6 to 7, configured to
send a channel similarity threshold message (501) indicating a determined threshold value to the terminal device of interest (203).

9. The base station device (200) according to claim 8, configured to
store a list (503) of a plurality of threshold values, and
select the determined threshold to indicate to the terminal device of interest (203) based on a target performance of that terminal device (203) or a largest signal interference level tolerable by that terminal device (203).

10. A method (300) for a terminal device (100) comprising
calculating (301) a channel similarity metric (101) including at least one channel similarity value (102), wherein each channel similarity value (102) indicates a degree of similarity between a first channel (103) from a base station device (104) to the terminal device (100) and a second channel (105) from the base station device (104) to another terminal device (106) of one or more other terminal devices (106); and
sending (302) a channel similarity feedback message (107) based on the channel similarity metric (101) to the base station device (104),
wherein the channel similarity metric (101) is calculated, for each respective resource block of a plurality of resource blocks, based on terminal-specific precoded pilot signals of ongoing transmissions to each of the one or more other terminal devices (106) scheduled on the respective resource block.

11. A method (400) for a base station device (200), comprising:
obtaining (401) channel similarity information (201) indicating a degree of similarity between a first channel (202) from the base station device (200) to a terminal device of interest (203) and at least one second channel (204) from the base station device (200) to another terminal device (205);
performing (401) scheduling, or scheduling and Multiple Input Multiple Output, MIMO, precoding, for a packet to be transmitted to the terminal device of interest (203) based on the channel similarity information (201);
receiving a channel similarity feedback message (107) including the channel similarity information (201) from the terminal device of interest (203);
producing a scheduling command, or a preempting command and a MIMO precoder computing command, based on the channel similarity information (201); and
scheduling a packet to be transmitted to the terminal device (203) of interest on at least one time-frequency resource that was to be used to transmit to another terminal device (205) having a channel similarity value with respect to the terminal device of interest (203) that is the highest value among the channel similarity values (102) related to the terminal device of interest (203) or that is larger than a threshold related to the terminal device of interest (203), after pausing transmission to said other terminal device (205).

## Patentansprüche

1. Endgerätevorrichtung (100), die konfiguriert ist zum
Berechnen einer Kanalähnlichkeitsmetrik (101), die einen oder mehrere Kanalähnlichkeitswerte (102) einschließt, wobei jeder Kanalähnlichkeitswert (102) einen Ähnlichkeitsgrad zwischen einem ersten Kanal (103) von einer Basisstationsvorrichtung (104) zu der Endgerätevorrichtung (100) und einem zweiten Kanal (105) von der Basisstationsvorrichtung (104) zu einer anderen Endgerätevorrichtung (106) von einer oder mehreren anderen Endgerätevorrichtungen (106) angibt, und
Senden einer Kanalähnlichkeitsrückmeldungsnachricht (107) basierend auf der Kanalähnlichkeitsmetrik (101) an die Basisstationsvorrichtung (104),
wobei die Kanalähnlichkeitsmetrik (101), für jeden bestimmten Ressourcenblock einer Vielzahl von Ressourcenblöcken, basierend auf endgerätespezifischen vorcodierten Pilotsignalen von laufenden Übertragungen an jede der einen oder der mehreren anderen Endgerätevorrichtungen (106), die auf dem spezifischen Ressourcenblock geplant sind, berechnet wird.

2. Endgerätevorrichtung (100) nach Anspruch 1, die konfiguriert ist zum
Verarbeiten der Kanalähnlichkeitsmetrik (101), um Kanalähnlichkeitsinformationen (201) zu erhalten, und
Einschließen der Kanalähnlichkeitsinformationen (201) in die Kanalähnlichkeitsrückmeldungsnachricht (107).

3. Endgerätevorrichtung (100) nach Anspruch 2, die konfiguriert ist zum
Durchführen einer Schwellenwertbildung an jedem Kanalähnlichkeitswert (102) basierend auf einem bestimmten Schwellenwert,
wobei die Kanalähnlichkeitsinformationen (201) ein Ergebnis der Schwellenwertbildung bezogen auf eine Vielzahl von zweiten Kanälen (105) angeben.

4. Endgerätevorrichtung (100) nach Anspruch 3, die konfiguriert ist zum
Speichern einer Liste (509) einer Vielzahl von Schwellenwerten, und
Auswählen des bestimmten Schwellenwerts aus der Liste (509) von Schwellenwerten basierend auf einer Kanalähnlichkeitsschwellenwertnachricht (501), die von der Basisstationsvorrichtung (104) empfangen werden.

5. Endgerätevorrichtung (100) nach Anspruch 3 oder 4, die konfiguriert ist zum Vergleichen jedes Kanalähnlichkeitswerts (102) mit dem bestimmten Schwellenwert, wobei die Kanalähnlichkeitsinformationen (201) nur jeden zweiten Kanal (105) angeben, der sich auf einen Kanalähnlichkeitswert (102), der höher als der bestimmte Schwellenwert ist, bezieht.

6. Basisstationsvorrichtung (200), die konfiguriert ist zum
Erhalten von Kanalähnlichkeitsinformationen (201), die einen Ähnlichkeitsgrad zwischen einem ersten Kanal (202) von der Basisstationsvorrichtung (200) zu einer Endgerätevorrichtung von Interesse (203) und mindestens einem zweiten Kanal (204) von der Basisstationsvorrichtung (200) zu einer anderen Endgerätevorrichtung (205) angeben,
Durchführen von Planen, oder Planen und Multiple-Input-Multiple-Output(MIMO)-Vorcodieren, für ein Paket, das an die Endgerätevorrichtung (203) von Interesse zu übertragen ist, basierend auf den Kanalähnlichkeitsinformationen (201),
wobei die Basisstationsvorrichtung (200) ferner konfiguriert ist zum:
Empfangen einer Kanalähnlichkeitsrückmeldungsnachricht (107), die die Kanalähnlichkeitsinformationen (201) umfasst, von der Endgerätevorrichtung von Interesse (203);
Erzeugen eines Planungsbefehls oder eines Preempting-Befehls und eines MIMO-Vorcodiererberechnungsbefehls basierend auf den Kanalähnlichkeitsinformationen (201); und
Planen eines Pakets, das an die Endgerätevorrichtung (203) von Interesse zu übertragen ist, auf mindestens einer Zeit-Frequenz-Ressource, die verwendet werden sollte, um an eine andere Endgerätevorrichtung (205) zu übertragen, das einen Kanalähnlichkeitswert in Bezug auf die Endgerätevorrichtung von Interesse (203) aufweist, der der höchste Wert unter den Kanalähnlichkeitswerten (102) bezogen auf die Endgerätevorrichtung von Interesse (203) ist oder der größer als ein Schwellenwert bezogen auf die Endgerätevorrichtung von Interesse (203) ist, nach einem Pausieren einer Übertragung an die andere Endgerätevorrichtung (205).

7. Basisstationsvorrichtung (200) nach Anspruch 6, die ferner konfiguriert ist zum Verwenden, für das Paket, das an die Endgerätevorrichtung von Interesse (203) zu übertragen ist, eines MIMO-Vorcodierers, der gleich dem MIMO-Vorcodierer, der verwendet werden sollte, um die pausierte Übertragung an die andere Endgerätevorrichtung (205) zu übertragen, ist oder gleich einer skalierten Version des MIMO-Vorcodierers ist.

8. Basisstationsvorrichtung (200) nach einem der Ansprüche 6 bis 7, die konfiguriert ist zum
Senden einer Kanalähnlichkeitsschwellenwertnachricht (501), die einen bestimmten Schwellenwert angibt, an die Endgerätevorrichtung von Interesse (203).

9. Basisstationsvorrichtung (200) nach Anspruch 8, die konfiguriert ist zum Speichern einer Liste (503) einer Vielzahl von Schwellenwerten, und Auswählen des bestimmten Schwellenwerts, um der Endgerätevorrichtung von Interesse (203) anzugeben, basierend auf einer Zielleistung dieser Endgerätevorrichtung (203) oder einem größten Signalinterferenzpegel, der durch diese Endgerätevorrichtung (203) tolerierbar ist.

10. Verfahren (300) für eine Endgerätevorrichtung (100), das umfasst
Berechnen (301) einer Kanalähnlichkeitsmetrik (101), die mindestens einen Kanalähnlichkeitswert (102) einschließt, wobei jeder Kanalähnlichkeitswert (102) einen Ähnlichkeitsgrad zwischen einem ersten Kanal (103) von einer Basisstationsvorrichtung (104) zu der Endgerätevorrichtung (100) und einem zweiten Kanal (105) von der Basisstationsvorrichtung (104) zu einer anderen Endgerätevorrichtung (106) von einer oder mehreren anderen Endgerätevorrichtungen (106) angibt; und
Senden (302) einer Kanalähnlichkeitsrückmeldungsnachricht (107) basierend auf der Kanalähnlichkeitsmetrik (101) an die Basisstationsvorrichtung (104),
wobei die Kanalähnlichkeitsmetrik (101) für jeden jeweiligen Ressourcenblock einer Vielzahl von Ressourcenblöcken basierend auf endgerätespezifischen vorcodierten Pilotsignalen von laufenden Übertragungen an jede der einen oder der mehreren anderen Endgerätevorrichtungen (106), die auf dem jeweiligen Ressourcenblock geplant sind, berechnet wird.

11. Verfahren (400) für eine Basisstationsvorrichtung (200), das umfasst:
Erhalten (401) von Kanalähnlichkeitsinformationen (201), die einen Ähnlichkeitsgrad zwischen einem ersten Kanal (202) von der Basisstationsvorrichtung (200) zu einer Endgerätevorrichtung von Interesse (203) und mindestens einem zweiten Kanal (204) von der Basisstationsvorrichtung (200) zu einer anderen Endgerätevorrichtung (205) angeben;
Durchführen (401) von Planen, oder Planen und Multiple-Input-Multiple-Output(MIMO)-Vorcodieren, für ein Paket, das an die Endgerätevorrichtung von Interesse (203) zu übertragen ist, basierend auf den Kanalähnlichkeitsinformationen (201);
Empfangen einer Kanalähnlichkeitsrückmeldungsnachricht (107), die die Kanalähnlichkeitsinformationen (201) einschließt, von der Endgerätevorrichtung von Interesse (203);
Erzeugen eines Planungsbefehls oder eines Preempting-Befehls und eines MIMO-Vorcodiererberechnungsbefehls basierend auf den Kanalähnlichkeitsinformationen (201); und
Planen eines Pakets, das an die Endgerätevorrichtung (203) von Interesse zu übertragen ist, auf mindestens einer Zeit-Frequenz-Ressource, die verwendet werden sollte, um an eine andere Endgerätevorrichtung (205) zu übertragen, das einen Kanalähnlichkeitswert in Bezug auf die Endgerätevorrichtung von Interesse (203) aufweist, der der höchste Wert unter den Kanalähnlichkeitswerten (102) bezogen auf die Endgerätevorrichtung von Interesse (203) ist oder der größer als ein Schwellenwert bezogen auf die Endgerätevorrichtung von Interesse (203) ist, nach dem Pausieren der Übertragung an die andere Endgerätevorrichtung (205).

## Revendications

1. Dispositif terminal (100), configuré pour
calculer une mesure de similarité de canal (101) comportant une ou plusieurs valeurs de similarité de canal (102), dans lequel chaque valeur de similarité de canal (102) indique un degré de similarité entre un premier canal (103) allant d'un dispositif de station de base (104) au dispositif terminal (100) et un second canal (105) allant du dispositif de station de base (104) à un autre dispositif terminal (106) d'un ou plusieurs autres dispositifs terminaux (106), et
envoyer un message de rétroaction de similarité de canal (107) sur la base de la mesure de similarité de canal (101) au dispositif de station de base (104),
dans lequel la mesure de similarité de canal (101) est calculée, pour chaque bloc de ressources particulier d'une pluralité de blocs de ressources, sur la base de signaux pilotes précodés spécifiques au terminal de transmissions en cours à chacun parmi le ou les autres dispositifs terminaux (106) programmés sur le bloc de ressources particulier.

2. Dispositif terminal (100) selon la revendication 1, configuré pour
traiter la mesure de similarité de canal (101) pour obtenir des informations de similarité de canal (201), et
inclure les informations de similarité de canal (201) dans le message de rétroaction de similarité de canal (107).

3. Dispositif terminal (100) selon la revendication 2, configuré pour
réaliser un seuillage sur chaque valeur de similarité de canal (102) sur la base d'une valeur seuil déterminée,
dans lequel les informations de similarité de canal (201) indiquent un résultat du seuillage lié à une pluralité de seconds canaux (105).

4. Dispositif terminal (100) selon la revendication 3, configuré pour
stocker une liste (509) d'une pluralité de valeurs seuils, et
sélectionner la valeur seuil déterminée à partir de la liste (509) de valeurs seuils sur la base d'un message seuil de similarité de canal (501) reçu à partir du dispositif de station de base (104).

5. Dispositif terminal (100) selon la revendication 3 ou 4, configuré pour
comparer chaque valeur de similarité de canal (102) à la valeur seuil déterminée,
dans lequel les informations de similarité de canal (201) indiquent uniquement chaque second canal (105) lié à une valeur de similarité de canal (102) supérieure à la valeur seuil déterminée.

6. Dispositif de station de base (200), configuré pour
obtenir des informations de similarité de canal (201) indiquant un degré de similarité entre un premier canal (202) allant du dispositif de station de base (200) à un dispositif terminal d'intérêt (203) et au moins un second canal (204) allant du dispositif de station de base (200) à un autre dispositif terminal (205),
réaliser une programmation, ou une programmation et un précodage à entrées multiples et sorties multiples, MIMO, pour un paquet à transmettre au dispositif terminal (203) d'intérêt sur la base des informations de similarité de canal (201), dans lequel le dispositif de station de base (200) est configuré en outre pour :
recevoir un message de rétroaction de similarité de canal (107) comportant les informations de similarité de canal (201) à partir du dispositif terminal d'intérêt (203) ;
produire une commande de programmation, ou une commande de préemption et une commande informatique de précodeur MIMO, sur la base des informations de similarité de canal (201) ; et
programmer la transmission d'un paquet au dispositif terminal (203) d'intérêt sur au moins une ressource temps-fréquence qui devait être utilisée pour une transmission à un autre dispositif terminal (205) ayant une valeur de similarité de canal par rapport au dispositif terminal d'intérêt (203) qui est la valeur la plus élevée parmi les valeurs de similarité de canal (102) liées au dispositif terminal d'intérêt (203) ou qui est supérieure à un seuil lié au terminal dispositif d'intérêt (203), après l'interruption d'une transmission audit autre dispositif terminal (205).

7. Dispositif de station de base (200) selon la revendication 6, configuré en outre pour utiliser, pour le paquet à transmettre au dispositif terminal d'intérêt (203), un précodeur MIMO égal au précodeur MIMO qui devait être utilisé pour transmettre la transmission interrompue à l'autre dispositif terminal (205), ou égal à une version mise à l'échelle dudit précodeur MIMO.

8. Dispositif de station de base (200) selon l'une des revendications 6 à 7, configuré pour envoyer un message de seuil de similarité de canal (501) indiquant une valeur seuil déterminée au dispositif terminal d'intérêt (203).

9. Dispositif de station de base (200) selon la revendication 8, configuré pour
stocker une liste (503) d'une pluralité de valeurs seuils, et
sélectionner le seuil déterminé à indiquer au dispositif terminal d'intérêt (203) sur la base d'une performance cible de ce dispositif terminal (203) ou d'un niveau d'interférence de signal le plus élevé tolérable par ce dispositif terminal (203).

10. Procédé (300) pour un dispositif terminal (100) comprenant
le calcul (301) d'une mesure de similarité de canal (101) comportant au moins une valeur de similarité de canal (102), dans lequel chaque valeur de similarité de canal (102) indique un degré de similarité entre un premier canal (103) allant d'un dispositif de station de base (104) au dispositif terminal (100) et un second canal (105) allant du dispositif de station de base (104) à un autre dispositif terminal (106) d'un ou plusieurs autres dispositifs terminaux (106) ; et
l'envoi (302) d'un message de rétroaction de similarité de canal (107) sur la base de la mesure de similarité de canal (101) au dispositif de station de base (104),
dans lequel la mesure de similarité de canal (101) est calculée, pour chaque bloc de ressources respectif d'une pluralité de blocs de ressources, sur la base de signaux pilotes précodés spécifiques au terminal de transmissions en cours à chacun parmi le ou les autres dispositifs terminaux (106) programmés sur le bloc de ressources respectif.

11. Procédé (400) pour un dispositif de station de base (200), comprenant :
l'obtention (401) d'informations de similarité de canal (201) indiquant un degré de similarité entre un premier canal (202) allant du dispositif de station de base (200) à un dispositif terminal d'intérêt (203) et au moins un second canal (204) allant du dispositif de station de base (200) à un autre dispositif terminal (205) ;
la réalisation (401) d'une programmation, ou d'une programmation et d'un précodage à entrées multiples et sorties multiples, MIMO, pour un paquet à transmettre au dispositif terminal d'intérêt (203) sur la base des informations de similarité de canal (201) ;
la réception d'un message de rétroaction de similarité de canal (107) comportant les informations de similarité de canal (201) à partir du dispositif terminal d'intérêt (203) ;
la production d'une commande de programmation, ou d'une commande de préemption et d'une commande informatique de précodeur MIMO, sur la base des informations de similarité de canal (201) ; et
la programmation de la transmission d'un paquet au dispositif terminal (203) d'intérêt sur au moins une ressource temps-fréquence qui devait être utilisée pour une transmission à un autre dispositif terminal (205) ayant une valeur de similarité de canal par rapport au dispositif terminal d'intérêt (203) qui est la valeur la plus élevée parmi les valeurs de similarité de canal (102) liées au dispositif terminal d'intérêt (203) ou qui est supérieure à un seuil lié au dispositif terminal d'intérêt (203), après l'interruption de la transmission audit autre dispositif terminal (205).
